(19) **Europäisches Patentamt / European Patent Office / Office européen des brevets**

(11) **EP 2 119 077 B1**

(12) ## FASCICULE DE BREVET EUROPEEN

(45) Date de publication et mention
de la délivrance du brevet:
**31.10.2012 Bulletin 2012/44**

(21) Numéro de dépôt: **08701651.5**

(22) Date de dépôt: **23.01.2008**

(51) Int Cl.:
*H04L 1/00* *(2006.01)*  *H03M 13/00* *(2006.01)*

(86) Numéro de dépôt international:
**PCT/EP2008/050771**

(87) Numéro de publication internationale:
**WO 2008/090182 (31.07.2008 Gazette 2008/31)**

(54) **PROCEDE ET DISPOSITIF CONTRE LA PERTE DE SALVES DANS UN SYSTEME DE TRANSMISSION DVB-H**

VERFAHREN UND SYSTEM GEGEN BURST-VERLUST IN EINEM DVB-H-ÜBERTRAGUNGSSYSTEM

METHOD AND SYSTEM AGAINST BURST LOSS IN A DVB-H TRANSMISSION SYSTEM

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **23.01.2007 FR 0752829**
**04.04.2007 FR 0754285**

(43) Date de publication de la demande:
**18.11.2009 Bulletin 2009/47**

(73) Titulaire: **UDCAST**
**06560 Valbonne (FR)**

(72) Inventeurs:
• **OTTAVJ, Luc**
**F-06560 Valbonne (FR)**
• **CLERGET, Antoine**
**F-06250 Mougins (FR)**

(74) Mandataire: **Callon de Lamarck, Jean-Robert et al**
**Cabinet Regimbeau**
**20 rue de Chazelles**
**75847 Paris cedex 17 (FR)**

(56) Documents cités:
**EP-A- 0 570 648    US-A- 5 870 412**
**US-A- 6 145 109**

• **EERENBERG O ET AL: "IP-recovery in The DVB-H link layer for TV on Mobile" CONSUMER ELECTRONICS, 2006. ICCE '06. 2006 DIGEST OF TECHNICAL PAPERS. INTERNATIONAL CONFERENCE ON LAS VEGAS, NV, USA 07-11 JAN. 2006, PISCATAWAY, NJ, USA,IEEE, 7 janvier 2006 (2006-01-07), pages 411-412, XP010896679 ISBN: 0-7803-9459-3**

**Description**

Le domaine de l'invention est celui des systèmes de communication, et plus précisément celui des systèmes de communication pour la transmission de contenus multimédia à destination de terminaux portables par le biais de réseaux de radiodiffusion numérique, notamment via une liaison satellite.

Le standard DVB-H est un exemple de norme de radiodiffusion numérique hertzienne pour la transmission de contenus vers des terminaux portables.

Selon ce standard, un flux IP de données comprend une pluralité de flux élémentaires, chacun découpé temporellement pour être transmis sous la forme de salves. Une correction d'erreur directe FEC (Forward Error Correction) peut être mise en oeuvre afin d'assurer une protection contre la perte de données à l'intérieur d'une salve.

L'implémentation de cette correction (à laquelle il sera par la suite fait référence sous l'appellation de 'FEC intra-salve') est décrite dans le document ETSI EN 301 192: « Digital Video Broadcasting (DVB); DVB specification for data broadcasting », en particulier au paragraphe 9 : « Time slicing and MPE-FEC ».

On trouvera également une description de ce mécanisme de correction d'erreur intra-salve dans la partie introductive de la demande PCT WO 2006/123231, en liaison avec les figures 2 et 3 de cette demande.

Le standard DVB-H présente l'inconvénient de ne pas être adapté à des situations susceptibles de présenter de longues interruptions ou extinctions dans la réception. Un exemple d'une telle situation est celle où un terminal recevant un signal d'un satellite est embarqué dans un véhicule et passe sous un rideau d'arbres lui occultant le satellite pendant plusieurs secondes, voire plusieurs dizaines de secondes. Un autre exemple est celui d'un terminal se déplaçant dans un mini-tunnel non équipé de répéteur (du type « Gap filler ») et qui, de ce fait, ne va pas pouvoir recevoir pendant plusieurs secondes le signal émis par le transmetteur le plus proche.

Or la correction d'erreur FEC intra-salve proposée dans le standard n'est pas adaptée à la correction de pertes liées à ces longues interruptions/extinctions. Calculée sur la base des données à l'intérieur d'une salve, la correction FEC intra-salve ne permet effectivement que la correction de pertes à l'intérieur d'une salve dont la durée est habituellement de l'ordre d'une fraction de seconde (typiquement 100 à 200 millisecondes).

Il existe donc un besoin pour une technique permettant d'adapter le standard DVB-H à des liaisons susceptibles de présenter de longues interruptions/extinctions, en particulier une liaison satellitaire. Cette technique devrait notamment permettre une récupération des données perdues lors de ces longues périodes d'interruptions/extinctions.

L'invention a pour objectif de répondre à ce besoin, et propose à cet effet, et selon un premier aspect, un Procédé de protection contre l'erreur dans un système de transmission dans lequel un flux de données comprend une pluralité de flux élémentaires découpés temporellement pour être transmis sous la forme de salves, caractérisé en ce qu'il met en oeuvre :

à l'émission de chaque salve d'un flux élémentaire, un calcul de correction d'erreur inter-salves consistant en un traitement de correction d'erreur directe appliqué à des données entrelacées d'une pluralité de salves du flux élémentaire,
et une dispersion de la correction calculée sur une pluralité de salves du flux élémentaire, de manière à associer à chaque salve du flux élémentaire des données relatives à la correction inter-salves.

Certains aspects préférés, mais non limitatifs, de ce procédé sont les suivants :

- les données d'une salve sont transmises sans délai, accompagnées de données supplémentaires relatives à des informations de correction qui ont été associées à cette salve ;
- l'émission des salves est retardée, en retardant l'émission des données d'une salve pour transmettre lesdites données dans une salve ultérieure, ou en retardant l'émission de données supplémentaires relatives à des informations de correction qui ont été associées à cette salve pour transmettre lesdites données supplémentaires dans une salve ultérieure ;
- les données d'une salve sont transmises telles quelles dans des salves protégées par la correction d'erreur directe inter-salves ;
- la correction d'erreur directe inter-salves est calculée sur une fenêtre glissante d'une pluralité de B+S salves entrelacées ;
- le traitement de correction d'erreur directe met en oeuvre un calcul de codes correcteurs d'erreurs Reed-Solomon ;
- la correction calculée est dispersée sur une pluralité S de salves du flux élémentaire, de sorte à former une trame dite trame MPE-OFEC pour chaque salve ;
- une trame MPE-OFEC est encapsulée en sections, lesdites sections comprenant des sections, dites sections MPE, relatives aux données de la salve et des sections, dites sections MPE-OFEC, relatives à la correction inter-salves ;
- le procédé comporte également l'introduction dans chaque section MPE-OFEC d'un en-tête présentant des informations telles qu'un récepteur du flux élémentaire a connaissance des paramètres de mise en oeuvre de la correction inter-salves ;

- il met également en oeuvre une protection contre la perte de données à l'intérieur d'une salve, ladite protection étant assurée en calculant une correction d'erreur directe intra-salve ;
- l'entrelacement consiste à entrelacer chaque salve d'une pluralité de B+S salves du flux élémentaire dans des Tableaux de Données d'Application d'une pluralité B de matrices prises parmi une pluralité B+S de matrices du type MPE-FEC ;
- le calcul d'erreur directe appliqué aux salves entrelacées consiste à calculer un Tableau de Données RS pour chacune des matrices du type MPE-FEC, à raison d'une matrice calculée par salve émise ;
- la dispersion de la correction calculée consiste à transmettre des colonnes de FEC inter-salves dans une salve, lesdites colonnes étant choisies parmi les Fo colonnes d'une pluralité B+S desdits Tableaux de Données RS ;
- les informations d'en tête comprennent l'indication du nombre (B) de salves qui sont entrelacées pour calculer la correction inter-salves, ainsi que l'indication du nombre S de salves sur lesquelles la correction inter-salves calculée est dispersée ;
- à la réception des sections d'une trame MPE-OFEC, les sections MPE sont entrelacées dans les Tableaux de Données d'Application d'une pluralité B+S de matrice du type MPE-FEC, et les sections MPE-OFEC sont placées dans les Tableaux de Données RS desdites matrices du type MPE-FEC, et en ce qu'en cas de perte totale ou partielle d'une salve, les sections MPE de ladite salve perdue sont recomposées à partir des données des Tableaux de Données RS dans lesquels les sections MPE-OFEC ont été placées ;
- le système de transmission est un système compatible DVB-H.

Selon un second aspect, l'invention concerne également un dispositif comprenant des moyens logiciels et/ou matériels configurés pour mettre en oeuvre le procédé selon le premier aspect de l'invention.

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :

- la figure 1 représente une trame MPE-FEC selon le standard DVB-H ;
- les figures 2a et 2b illustrent la correction d'erreur à l'aide respectivement de la FEC intra-salve selon le standard et de la FEC inter-salves proposée par l'invention ;
- les figures 3a-3c illustrent le codage d'une salve pour y associer la correction d'erreur FEC inter-salves;
- la figure 4 illustre la reconstruction d'une salve complètement perdue à l'aide de la correction d'erreur FEC inter-salves ;
- la figure 5 représente un mode de réalisation possible d'un dispositif selon le second aspect de l'invention.

L'invention a pour cadre un système de transmission dans lequel un flux de données comprend une pluralité de flux élémentaires (ES, selon la terminologie anglo-saxonne 'Elementary Stream') découpés temporellement pour être transmis sous la forme de salves.

Un exemple préférentiel, mais non limitatif, d'un tel système est un système compatible avec le standard DVB-H.

L'invention propose un mécanisme de protection contre des pertes dues à de longues interruptions/extinctions de la transmission au niveau du récepteur. A ce titre, l'invention est particulièrement adaptée, sans pour autant y être limitée, à une transmission par l'intermédiaire d'une liaison satellite.

Selon un premier aspect, l'invention propose un procédé de protection contre l'erreur dans un système de transmission dans lequel un flux de données comprend une pluralité de flux élémentaires ES découpés temporellement pour être transmis sous la forme de salves, ledit procédé mettant en oeuvre une protection contre la perte totale ou partielle d'une ou plusieurs salves d'un flux élémentaire de données ES découpé temporellement.

La protection est plus précisément assurée en réalisant un calcul de correction d'erreur directe inter-salves, c'est-à-dire un calcul de correction directe prenant en considération plusieurs salves d'un flux élémentaire ES.

Cette correction de FEC inter-salves est associée à des salves du flux pour transmission vers le récepteur, de sorte qu'une ou plusieurs salves d'un même flux élémentaire qui auraient été sévèrement ou totalement dégradées lors de la transmission (c'est-à-dire reçues avec des erreurs résiduelles, non corrigées par la FEC intra-salve, ou encore non reçues en totalité au niveau du récepteur ; typiquement un terminal portable en situation de mobilité) peuvent être intégralement reconstituées à l'aide de la correction FEC inter-salves.

La correction selon l'invention permet ainsi d'étendre la protection des salves à des dégradations importantes ou a des pertes complètes de salves, là où cette protection était précédemment limitée à des pertes modérées à l'intérieur des salves par mise en oeuvre de la correction FEC intra-salve du standard.

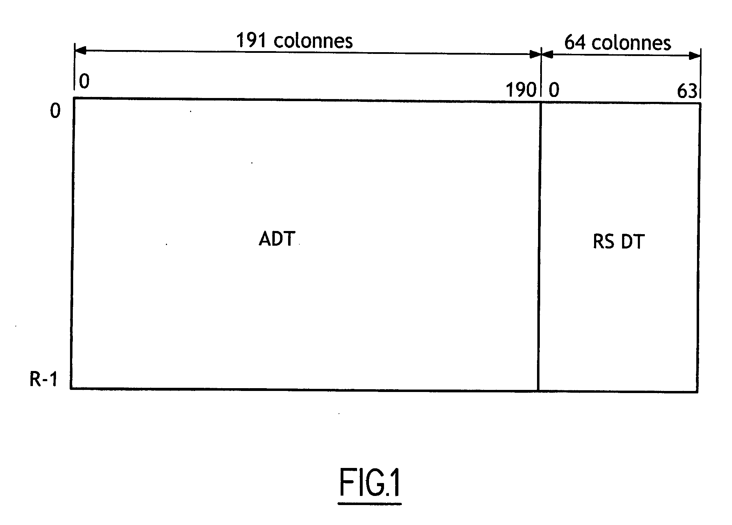

En référence à la figure 1, on rappelle brièvement ci-après le calcul de la correction 'FEC intra-salve' préconisée par le standard DVB-H.

Comme représenté sur la figure 1, une trame MPE-FEC est constituée sous la forme d'une matrice d'octets comprenant 255 colonnes et un nombre adaptable de lignes (R, avec un maximum de 1024).

Les 191 premières colonnes de cette trame constituent le tableau de données d'application (ADT, acronyme de Application Data Table), les 64 dernières constituent le Tableau de Données Reed Solomon (RSDT, acronyme de Reed Solomon Data Table). Les tableaux ADT et RSDT forment ensemble une matrice MPE-FEC.

Les datagrammes d'une salve sont regroupés verticalement dans les C premières colonnes (C<191) et R lignes pour former le Tableau de Données d'Application (ADT).

Un code correcteur d'erreur Reed Solomon ayant comme paramètres (255, 191, 64) et des symboles de 8 bits est calculé sur chaque ligne de la matrice MPE-FEC. Cela conduit à calculer pour chaque ligne de 191 octets de données, une parité sur 64 octets. Ces octets de parité sont stockés dans les lignes du tableau RSDT.

Les données contenues dans l'ADT sont transmises par colonnes dans des section MPE (Multi Protocol Encapsulation) à raison d'un datagramme IP par section MPE. Un champ de l'en-tête MPE indique la position en octets du début du datagramme dans la matrice MPE-FEC. De même, les sections MPE d'une salve sont numérotées, ce numéro ainsi que le numéro de la dernière section de la salve étant signalés dans chaque trame MPE.

Par ailleurs le mécanisme MPE est doté d'un code CRC permettant au récepteur d'écarter en bloc une section incomplète ou erronée. Ces informations vont permettre au récepteur d'une part de placer correctement les datagrammes IP reçus dans l'ADT du récepteur, et de localiser les portions de l'ADT à reconstituer en cas de perte ou d'erreur et, d'autre part, de réinsérer sans les transmettre des zéros dans les colonnes de droite de l'ADT lorsque le nombre C de colonnes est inférieur à 191.

Les données contenues dans le tableau RSDT sont transmises en colonnes dans des sections MPE-FEC à raison d'une colonne par section, ces sections MPE-FEC ayant un format voisin de MPE mais un type différent.

Les sections MPE-FEC d'une salve sont numérotées, ce numéro ainsi que le numéro de la dernière section étant mentionnés dans chaque trame MPE-FEC. Ces sections sont munies elles aussi d'un CRC.

Ces informations vont permettre au récepteur de placer correctement les colonnes de FEC reçues dans le tableau RSDT associée à la salve.

Cette correction, ici désignée par le terme de correction FEC intra-salve, permet de récupérer jusqu'à 64 colonnes perdues sur les 255 de la matrice MPE-FEC.

L'efficacité de cette correction peut être diminuée en ne transmettant qu'une partie des colonnes du tableau RSDT (opération de poinçonnage). Cette efficacité peut au contraire être augmentée en ne remplissant pas complètement le tableau ADT, et en insérant dans ses dernières colonnes de droite des zéros non transmis.

Ces mécanismes peuvent aussi être utilisés pour assurer une efficacité constante dans un contexte où la taille des salves varie dans le temps. Ceci est obtenu en assurant pour chaque salve un ratio constant entre le nombre de colonnes non nulles du tableau ADT et le nombre de colonnes du tableau RSDT effectivement transmises.

On comprend donc que la correction FEC intra-salve permet de récupérer des données perdues à l'intérieur d'une salve.

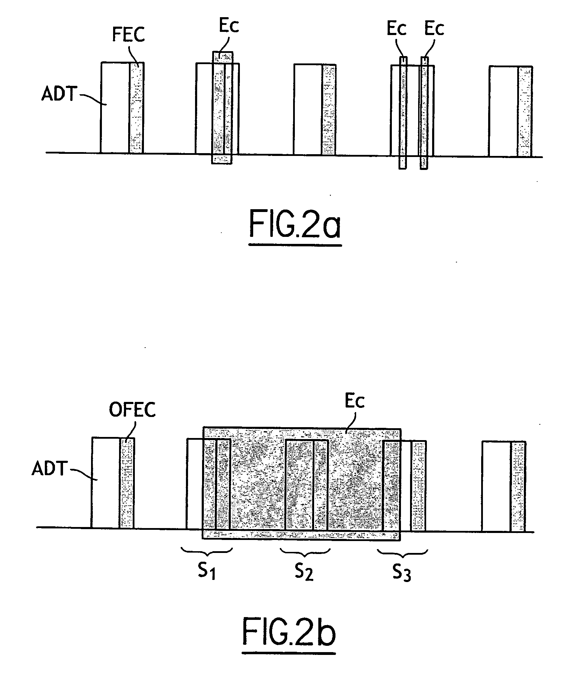

Cette correction d'erreur est illustrée par la figure 2a sur laquelle on a représenté différentes salves, chacune constituée des données ADT et des données FEC de correction FEC intra-salve, ainsi que la correction d'erreurs - schématisée par un bloc Ec - susceptible d'être réalisée à l'aide de la correction FEC intra-salve pour des pertes à l'intérieur d'une salve.

Un mode de réalisation préférentiel du procédé selon l'invention est décrit ci-après.

Les paramètres utiles au procédé selon l'invention sont les suivants :

- C: nombre maximum de colonnes du tableau ADT d'une salve
- B : nombre de salves entrelacées utilisées pour le calcul de la correction d'erreur inter-salves ;
- S : nombre de salves utilisées pour disperser la correction d'erreur inter-salves ;
- $F_0$ : nombre de colonnes utilisées pour le calcul de la correction d'erreur inter-salves.

Les étapes du mode de réalisation préférentiel sont décrites dans ce qui suit, pour un cas simpliste où C=10, B=5, $F_0$=6 et S=3.

Afin de réaliser le calcul de la correction d'erreur directe inter-salves, les données d'une pluralité B+S de salves d'un flux élémentaire ES sont entrelacées, et un traitement de correction d'erreur directe FEC est appliqué aux salves entrelacées.

A titre d'initialisation, B+S matrices M(0), ..., M(B+S-1), de taille 191xR sont constituées et remplies de zéros.

B+S matrices MF(0), ..., MF(B+S-1), de taille 64*R sont également constituées, et initialement remplies de zéros. Ces matrices permettront d'accueillir la FEC (inter-salves) associée aux matrices de données M(0), ..., M(B+S-1).

En d'autres termes B+S matrices de type MPE-FEC sont constituées, chacune disposant d'une matrice M(i) en tant que tableau ADT et d'une matrice MF(i) en tant que tableau RSDT.

On notera qu'il y a autant de jeux de matrices (M, MF) qu'il y a de flux élémentaires en cours de transmission. On relèvera en particulier que l'on peut retenir des paramètres différents pour les différents flux élémentaires.

Au niveau de l'émetteur, le procédé met en oeuvre les étapes suivantes pour chaque salve de numéro i d'un flux élémentaire donné.

1. Etape 1 : envoi de la salve de numéro i contenant les données de cette salve, optionnellement la FEC intra-salve, et une partie de la FEC inter-salves calculée lors du traitement des salves précédentes du même flux élémentaire

2. Etape 2 : Entrelacement (avec décalage des colonnes de l'ADT) de la salve émise dans les tableaux ADT (matrices M(m), m variant de 0 à B+S-1) des matrices de type MPE-FEC.

3. Etape 3: Calcul de la FEC pour la matrice M(m) (m = (i)[B+S]) Dans ce qui suit [X] désigne modulo X

4. i= i+1 et retour en 1

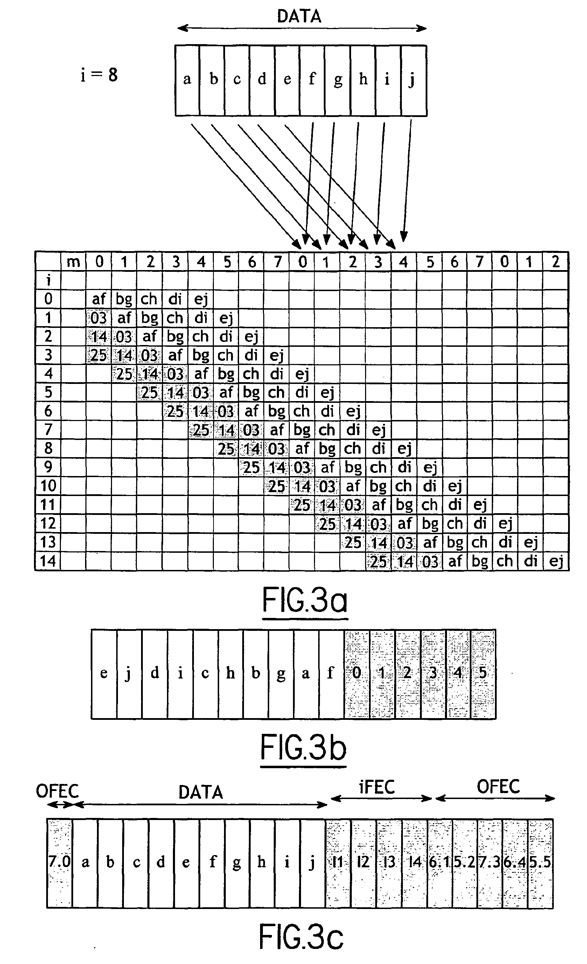

Ces différentes étapes sont schématisées sur les figures 3a-3c.

Sur la figure 3a, on a représenté la salve i=8 présentant les données a-j. Les données de cette salve sont entrelacées comme cela est schématisé par les flèches sur la figure 3a dans les tableaux ADT (matrices M(m)) de B=5 matrices de type MPE-FEC.

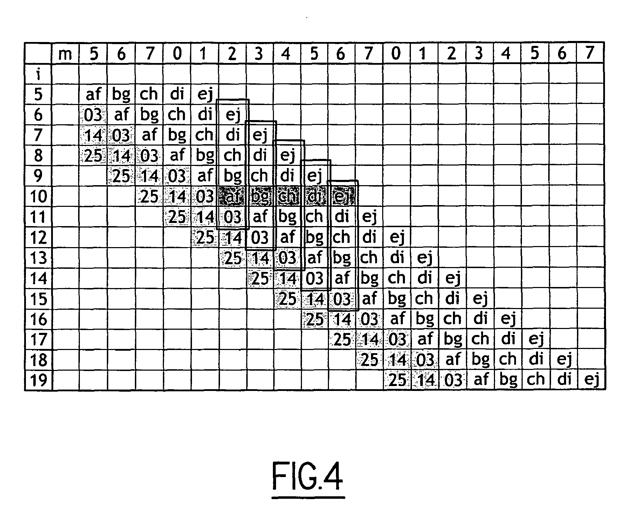

On relèvera que sur la figure 3a, comme sur la figure 4 qui sera discutée par la suite, les données des différentes matrices M(m) sont représentées par des lettres, tandis que les données de FEC inter-salves calculées pour chacune des matrices M(m) sont représentées par des numéros.

La figure 3b représente la matrice de type MPE-FEC contenant les données de la matrice M(0) et les données de FEC calculée pour cette matrice M(0) (ces données étant regroupées dans une matrice MF(0) comme détaillé ci-après).

La figure 3c représente l'émission de la salve i=8, comprenant outre les données d'origine a-j DATA et les données iFEC de FEC intra-salve, $F_0$=6 colonnes OFEC de FEC inter-salves (m.k désignant la colonne k de la matrice MF(m)).

Les différentes étapes mises en oeuvre à l'émission sont détaillées ci-après. ❖ Etape 1: Transmission de la salve

✔ la salve n°i est préparée comme une salve DVB-H standard. A ce titre, elle peut notamment incorporer une FEC intra-salve standard.

✔ La salve est envoyée sans délai :

○ La salve DVB-H est envoyée telle quelle, sans changement par rapport au standard (en incorporant de manière optionnelle des sections MPE-FEC relatives à la FEC intra-salve).

○ Des sections MPE-OFEC relatives à la correction inter-salves sont ajoutées à la salve n°i comme suit. On réalise de la sorte une dispersion de la correction calculée sur une pluralité de salves du flux élémentaire, en formant de la sorte une trame MPE OFEC pour chaque salve.

■ Pour k dans 0,... $F_0$-1, un paquet Outer FEC OFEC(m,k) est calculé de la manière suivante:

• On définit m = ((i-1) - k[S])[B].
• On définit OFEC(m,k) = colonne k de MF(m)

■ Le paquet Outer FEC OFEC(m,0) est envoyée au début de la salve, les autres paquets Outer FEC sont envoyées à la fin de la salve.

On comprend donc que les données de la salve sont transmises telles quelles dans des salves protégées par la correction FEC inter-salves par envoi des paquets Outer FEC en début et fin de salve. On a choisi, pour les colonnes de FEC inter-salves transmises dans une salve protégée, des colonnes parmi les $F_0$ colonnes de la pluralité B+S des matrices MF.

On forme ainsi une trame MPE OFEC qui peut être encapsulée en sections : des sections MPE relatives aux données de la salve, d'éventuelles sections MPE-FEC en cas de mise en oeuvre de la correction intra-salve, et des sections MPE-OFEC relatives à la correction inter-salves.

■ Les sections MPE-OFEC correspondent à une table différente des sections MPE et des sections MPE-FEC. Les valeurs de i et de k sont signalées à l'intérieur de la section.

■ Un en-tête est ajouté à chaque section MPE-OFEC, cet en-tête présentant des informations telles qu'un récepteur du flux élémentaire a connaissance des paramètres de mise en oeuvre de la correction FEC inter-salves, notamment des paramètres B et S.

La salve i ainsi envoyée est composée de $F_0$ ($F_0$=6 dans l'exemple) colonnes de FEC inter-salves, de C colonnes de données (C=10 dans l'exemple), et de P colonnes de FEC intra salve (P=0 dans l'exemple)

La salve i=0 selon l'exemple a ainsi le format suivant:

*F7-0  0-a 0-b 0-c 0-d 0-e 0-f 0-g 0-h 0-i 0-j F-I F6-1 F5-2 F7-3 F6-4F5-5*

où :

- F7-0 est la colonne OFEC 0 de la RSDT MF(7)
- 0-a, 0-b, 0-c, 0-d.. 0-j, sont les n premières colonnes non nulles de l'ADT de la salve 0 , ici n=10
- F-I représente les P colonnes de FEC intra salve optionnelle, qui par souci de simplification, ne seront plus mentionnées dans la suite
- F6-1, F5-2, F7-3, F6-4, F5-5 représentent respectivement les colonnes OFEC 1, 2, 3, 4, 5 des matrices RSDT MF (6), MF(5), MF(7), MF(6), MF(5)

Les salves i=1,2,3,4 et 5 ont quant à elle le format suivant:

*Salve 1: F0-0 - DATA - F7-1 F6-2 F0-3 F7-4 F6-5*

*Salve 2: F1-0 - DATA - F0-1 F7-2 F1-3 F0-4 F7-5*

*Salve 3: F2-0 - DATA - F1-1 F0-2 F2-3 F1-4 F0-5*

*Salve 4: F3-0 - DATA - F2-1 F1-2 F3-3 F2-4 F1-5*

*Salve 5: F4-0 - DATA - F3-1 F2-2 F4-3 F3-4 F2-5*

où DATA désigne les colonnes de données.

On relèvera que les données d'une salve sont transmises sans délai et qu'elles contiennent les informations standard DVBH, accompagnées d'informations supplémentaires (OFEC).

Il en résulte qu'un terminal recevant un tel flux, et n'ayant pas besoin des informations OFEC ou ne sachant pas les traiter, aura un comportement et des performances comparables à ceux qu'il aurait eus s'il avait reçu un flux DVB-H normal. Ces comportement et performances s'entendent vis à vis de sujets comme le retard à l'affichage ou le temps de changement de chaines (zapping).

On relèvera par ailleurs qu'au niveau de leur transmission les informations OFEC sont dispersées sur plusieurs salves, limitant ainsi les effets liés à la perte de transmission sur de longes périodes

Dans ce qui précède, on a considéré une transmission sans délai des données d'une salve. La salve de numéro i contient effectivement les données de cette salve Data-i accompagnées de données supplémentaires OFEC-i relatives à des informations de FEC inter-salves OFEC qui ont été associées à cette salve. Ainsi, on a considéré Salve i = (Data-i, OFEC-i).

L'invention n'est toutefois pas limitée à une telle transmission sans délai, l'émission des salves pouvant être retardée.

Selon une première variante de réalisation, il est proposé de retarder l'émission des paquets de données. Dans le cadre de cette variante, les paquets OFEC-i sont transmis comme précédemment décrit dans la salve numéro i, tandis que les paquets de données Data-i de la salve numéro i sont retardés et transmis X salves plus tard, dans la salve numéro X+i. Ainsi, on propose dans cette variante que la salve numéro i soit émise selon :

Salve i = (Data-[i-X], OFEC-i).

On comprend que :

- Si X=0, cette variante est identique à ce qui a été décrit précédemment ;
- Si X < B + S, la FEC inter-salves OFEC est mixée avec les données ;
- Si X = B+S, la FEC inter-salves OFEC est transmise avant les données.

En mettant en oeuvre cette variante, un inconvénient réside dans le fait qu'un délai de bout en bout est ajouté, qui s'étend sur X salves. Un avantage réside dans une réduction du temps nécessaire pour corriger les pertes, dans la mesure où la FEC inter-salves OFEC est reçue avec les données originelles.

Selon une seconde variante de réalisation, il est proposé de retarder l'émission des paquets OFEC. Dans le cadre de cette variante, les paquets de données Data-i de la salve numéro i sont transmis comme précédemment décrit dans la salve numéro i, tandis que les paquets OFEC-i sont retardés et transmis Y salves plus tard, dans la salve numéro Y+i. Ainsi, on propose dans cette variante que la salve numéro i soit émise selon :

Salve i = (Data-i, OFEC-[i-Y]).

Un inconvénient de cette variante réside dans l'augmentation du temps nécessaire pour corriger les pertes. Cette variante présente toutefois l'avantage d'être particulièrement adaptée à la correction d'erreurs consécutives à de très longues extinctions dans la réception. ❖ Etape 2: Entrelacement dans les matrices M(m)

On réalise un entrelacement d'une pluralité B+S de salves du flux élémentaire ES dans les tableaux ADT d'une pluralité B+S de matrices du type MPE-FEC, chaque salve étant entrelaçée dans une pluralité B de matrices choisies parmi une pluralité B+S.

Les colonnes de l'ADT de la salve i sont entrelacées dans les B+S matrices M(0), ..., M(B+S-1) de la manière suivante.

✓ La salve n°i occupe une matrice de taille C*R (R étant annoncé dans les tables PSI/SI)
✓ Les C colonnes de données de la salve n°i (contenant R lignes) sont copiées dans les matrices M(m) de la manière suivante

　○ Pour j dans 0,... C-1

　　■ On définit m = (i+(j[B]))[B+S]
　　■ Les colonnes de la matrice M(m) sont décalées:

　　　Col(1)->Col(0), Col(2)->Col(1), ..., Col(C-1) -> Col(C-2)

　　■ La colonne de données n°j est copié à la colonne C-1 de la matrice M(m) ; si la salve contient moins de C colonnes de données, les données copiées sont remplies de zéros.

Dans l'exemple, pour i=0, les 5+3=8 matrices M(0) ... M(7) seront remplies de la façon suivante (les colonnes vides en fin de matrice ne sont pas indiquées par souci de lisibilité):

*M(0)=0-a 0-f*

*M(1)=0-b 0-g*

*M(2)=0-c 0-h*

*M(3)=0-d 0-i*

*M(4)=0-e 0-j*

$$M(5)= Vide$$

$$M(6)= Vide$$

$$M(7)= Vide$$

Pour i=1 le contenu des matrices M(m) sera le suivant:

$$M(0)=0\text{-}a\ 0\text{-}f$$

$$M(1)=0\text{-}b\ 0\text{-}g\ \ 1\text{-}a\ 1\text{-}f$$

$$M(2)=0\text{-}c\ 0\text{-}h\ 1\text{-}b\ 1\text{-}g$$

$$M(3)=0\text{-}d\ 0\text{-}i\ 1\text{-}c\ 1\text{-}h$$

$$M(4)=0\text{-}e\ 0\text{-}j\ 1\text{-}d\ 1\text{-}i$$

$$M(5)=1\text{-}e\ 1\text{-}j$$

$$M(6)= Vide$$

$$M(7)=Vide$$

On relèvera que le mécanisme de calcul et de transmission de la FEC inter-salves est glissant et ne nécessite donc pas une synchronisation forte entre l'émetteur et les récepteurs.

Ce mécanisme autorise en particulier un calcul de la FEC inter-salves progressif; ce calcul étant en outre limité à une trame MPE-FEC à chaque salve.

Ce mécanisme se distingue donc de systèmes opérant sur des blocs de B+S salves, qui nécessiteraient toutes les B+S salves d'importants temps de calcul.

On relèvera en outre que le mécanisme d'entrelacement conduit, lorsque C est multiple de B, à placer PB = C/B colonnes d'une salve par matrice M(m) (PB=10/5=2 dans l'exemple) et que chaque matrice M(m) contient alors dans ce cas une fraction (1/B) des B salves parmi les B+S dernières salves transmises. Toutefois, le mécanisme d'entrelacement ne nécessite pas d'avoir C multiple de B. ❖ Etape 3: Calcul de la FEC inter-salve sur la matrice M(m) : m=i[B+S]

La correction FEC inter-salves est calculée sur une fenêtre glissante de B+S salves entrelacées.

Les $F_0$ colonnes de FEC sont calculées pour la matrice M(i[B+S]) et stockées dans la matrice MF(i[B+S]). En d'autres termes, on a réalisé le calcul du tableau RSDT (matrice MF) pour l'une des matrices du type MPE-FEC (dont le tableau ADT est la matrice M correspondante dans laquelle plusieurs salves sont entrelacées).

On relèvera à ce stade que le calcul de FEC mis en oeuvre pour chacune des matrices entrelacées M(i) peut utiliser, sans que cela ne soit pour autant limitatif (d'autres codes correcteurs d'erreur pouvant effectivement être mis en oeuvre), le même code correcteur d'erreur que celui préconisé dans le standard DVB-H pour le calcul de la FEC intra-salve (Code Reed Solomon 191, 255, 64 avec symboles de 8 bits).

On relèvera également, que le calcul de FEC est un calcul inter-salves, dans la mesure où chaque FEC (matrice MF(i)) est calculée à partir de données (matrices M(i)) comprenant des données de plusieurs salves entrelacées.

On notera également que les données d'une salve sont indépendantes de la FEC inter-salves transmise avec cette même salve, dans la mesure où ces données seront utilisées pour calculer la FEC inter-salves des B+S salves suivantes.

Le passage ci-après est un exemple possible de structure pour une section MPE-OFEC. Cet exemple est donné par comparaison avec la structure d'une section MPE-FEC prévue dans le standard.

**Section MPE-FEC :**

| Syntax | Number of bits | Identifier |
|---|---|---|
| MPE-FEC_section () { | | |
| table_id | 8 | uimsbf |
| section_syntax_indicator | 1 | bslbf |
| private_indicator | 1 | bslbf |
| reserved | 2 | bslbf |
| section_length | 12 | uimsbf |
| padding_columns | 8 | uimsbf |
| reserved_for_future_use | 5 | bslbf |
| reserved | 2 | bslbf |
| reserved_for_future_use | 5 | bslbf |
| current_next_indicator | 1 | bslbf |
| section_number | 8 | uimsbf |
| last_section_number | 8 | uimsbf |
| real_time_parameters() | | |
| for( i=0; i<N; i++ ) { | | |
| rs_data_byte | 8 | uimsbf |
| } | | |
| CRC_32 | 32 | uimsbf |
| } | | |

**Section MPE-OFEC :**

| SYNTAX | Number of bits | Identifier |
|---|---|---|
| MPE-OFEC_section { | | |
| table-id | 8 | uimsbf |
| section_syntax_indicator | 1 | bslbf |
| private_indicator | 1 | bslbf |
| reserved | 2 | bslbf |
| section_length | 12 | uimsbf |
| interleaved bursts | 8 | uimsbf |
| outer-fec spread | 8 | uimsbf |
| burst number (nc) | 8 | uimsbf |
| reserved_for_future_use | 3 | bslbf |
| reserved | 2 | bslbf |
| reserved_for_future_use | 5 | bslbf |
| current_next_indicator | 1 | bslbf |
| section_number | 8 | uimsbf |
| last_section_number | 8 | uimsbf |
| real_time_parameters | | |
| for (i=0; i<N; i++) { | | |
| rs_data_byte | 8 | uimsbf |
| } | | |
| CRC_32 | 32 | uimsbf |
| } | | |

Les paramètres temps réel et leur mapping en champ d'adresse MAC sont :

```
            SYNTAX                         Number of bits      Identifier

      real_time_parameters {
          delta_t                              12               uimsbf
          table_boundary                        1               bslbf
          frame_boundary                         1               bslbf
          address                               18               uimsbf


        0   1   2   3   4   5   6   7

      +---+---+---+---+---+---+---+---+
      |           Delta-t             |   MAC 4
      +---+---+---+---+---+---+---+---+
      |                   | Prev-Burst  Si|   MAC 3
      +---+---+---+---+---+---+---+---+
      |     Prev-Burst Size           |   MAC 2
      +---+---+---+---+---+---+---+---+
      |     Prev-Burst Size      (lsb)|   MAC 1
      +---+---+---+---+---+---+---+---+
```

La sémantique ici proposée est la suivante :

✔ section_number:
Ce champ de 8 bits donne le numéro de la section. Le 'section_number' de la première section portant les données RS d'une trame MPE-OFEC est 0x00. Le 'section_number' est incrémenté de 1 avec chaque section additionnelle portant les données RS de la trame MPE-OFEC concernée (ce champ porte ainsi le paramètre k).

✔ last_section_number:
Ce champ indique le numéro de la dernière section qui est utilisée pour porter les données RS de la trame courante MPE-OFEC (ce champ porte ainsi le paramètre Fo).

✔ interleaved bursts:
Ce champ donne le nombre B de salves qui sont entrelacées pour le calcul de la FEC inter-salves

✔ outer-fec spread:
Ce champ donne le nombre S de salves transmises sur lesquelles la FEC inter-salves est dispersée.

✔ burst number:
Ce champ porte un numéro de salve (sous la forme d'un compteur continu) variant entre 0 et N-1, où N est le plus grand multiple de B inférieur à 256 (ce champ porte ainsi le paramètre i).

✔ Prev-Burst Size:
Ce champ de 18 bit porte la taille effective (seulement tableau ADT) de la salve (i-k-1).

On décrit ci-après la réception des sections d'une trame MPE-OFEC, ainsi que le mécanisme de correction mis en oeuvre en cas de perte totale ou partielle d'une ou plusieurs salves.

A la réception des sections d'une trame MPE-OFEC, les sections MPE sont entrelacées dans les tableaux ADT (matrices RM ci-après) d'une pluralité B+S de matrices du type MPE-FEC, et les sections MPE-OFEC sont placées dans les Tableaux de Données RS (matrices RF ci-après) desdites matrices du type MPE-FEC. En cas de perte totale ou partielle d'une salve, les sections MPE d'une salve perdue sont recomposées à partir des données des Tableaux de Données RS dans lesquels les sections MPE-OFEC ont été placées.

Un mode de réalisation possible du procédé pour le décodage est le suivant.

• Initialisation :

A titre d'initialisation, le décodeur a besoin de connaître les paramètres B et S. Le paramètre $F_0$ n'a pas besoin d'être connu par avance.

Le décodeur alloue B+S matrices RM(0), ..., RM(B+S-1), de taille CxR, remplies de zéros.

Il alloue également B+S matrices de FEC RF(0), ..., RF(B+S-1) afin d'accueillir la FEC des matrices de données RM(0), ... RM(B+S-1). Ces matrices de FEC ont une taille de 64xR, et sont remplies de zéros.

Le dernier numéro de salve Y corrigée et transmise à la couche supérieure est initialisé à partir du premier numéro de salve reçu P : Y = P - 1.

• Etape 1 : Replacer les sections reçues dans la séquence de salve

✓ A la réception d'une section MPE/MPE-FEC, le décodeur détermine son numéro de salve :

- Soit ip/tp/dtp respectivement le numéro de salve, l'heure de réception et le champ delta-t de la précédente section MPE-OFEC reçue après cette section MPE
- Soit in/tn/dtn respectivement le numéro de salve et l'heure de réception et le champ delta-t de la prochaine section MPE-OFEC
- Si (ip==in) burst_number = i=ip=in
- Sinon, le résultat peut être basé sur ce qui suit

  ○ SI tp+dtp<t et t+dt>tn ALORS i=in
  ○ SINON SI tp+dtp>t ET t+dt<tn ALORS i=ip
  ○ SINON IGNORE cette section MPE pour le décodage de la FEC inter-salves.

• Etape 2 : Régénérer une séquence complète de (pseudo) salves

✓ On complète la séquence de salves reçues jusqu'au numéro de salve en cours de réception, avec des pseudo-salves représentant les salves totalement perdues, et on marque les colonnes perdues des salves partiellement reçues comme étant manquantes.
✓ Le champ « Prev-Burst Size » des paquets de MPE-OFEC permet de connaître la taille des salves précédentes. Cette information est exploitée pour marquer les données au-delà de la fin de la salve comme étant non-pas manquante mais valant zéro.

• Etape 3 : Exploiter la FEC intra-salve

✓ On exploite la FEC intra-salve des salves reçue en exploitant les mécanismes MPE-FEC standard. Celle-ci n'est bien sur pas exploitable pour les salves manquantes (pseudo-salves).

Pour chacune des nouvelles salves ou pseudo-salve reçue :

• Etape 4 : Placer la FEC inter-salve dans les matrices RF

Pour toutes les sections de MPE-OFEC (reçues ou ayant dû être reçues), d'indice (de « section_number ») k=0..$F_0$-1 :

• m=((i-1)-k[S])[B+S]
• Le (pseudo-)paquet de MPE-OFEC est inséré dans la matrice RF(m) en position k

• Etape 5 : Exploiter la FEC inter-salve

- Pour k=0,..S-1

  ■ m=((i-1)-k[S])[B+S]
  ■ Corriger les pertes présentes dans la matrice RM(m) avec la FEC inter-salve présente dans la matrice RF(m)

• Etape 6 : Faire remonter les salves corrigées à la couche supérieure

- Si la salve Y+1 est complète, faire remonter cette salve à la couche supérieure. Alors Y=Y+1.

Dans ce cas (cas A « ordonné différé ») pour lequel tant qu'une trame est en cours de reconstitution et toujours reconstituable, on bloque les salves ultérieures pour remettre le tout dans l'ordre mais de façon différée. On prévoit également le cas B « immédiat désordonné » pour lequel les salves correctement reçues sont remontées sans délai à la couche supérieure , seuls les datagrammes obtenus par resconstitution d'une salve arrivant dans la couche supérieure de façon différée et dans le désordre.

- Sinon, si Y=i-B-S, il ne sera plus possible de corriger la salve Y. Alors Y=Y+1

• Etape 7 : Insertion des données dans les matrices RM

- Pour i=0,...,C-1

  ■ m=(i+j[B])[B+S]
  ■ Les colonnes de la matrice RM(m) sont décalées vers la gauche
  ■ La colonne i de la salve est insérée dans la matrice RM(m) en colonne C-1

On décrit ci-après la réception de sept salves d'indice i=9 à i=15, avec une perte de l'intégralité des données de la salve de numéro 10 (i=10).

Ces étapes sont illustrées par le schéma de la figure 4 sur lequel on considère la perte de la salve i=10, ce schéma permettant de visualiser les matrices utilisées pour de reconstruire les données a-j de cette salve.

Ainsi, on exploite des colonnes de FEC inter-salves de la salve 11 (bloc 03 sur la figure) pour reconstruire les colonnes de données af de la salve 10. De même, on exploite des colonnes de FEC inter-salves de la salve 12 pour reconstruire les colonnes de données bg de la salve 10. Et cela, ainsi de suite jusqu'à l'exploitation de colonnes de FEC inter-salves de la salve 15 pour reconstruire les colonnes de données ej de la salve 10.

Comme cela est apparent sur la figure 4, on comprend donc que les données de la salve 10 intégralement perdue peuvent être reconstituées à l'aide des colonnes de FEC inter-salves associées aux salves 11 à 15.

En se plaçant à la réception de la salve 11, le récepteur ayant reçu sans erreur les trames 0 à 9 va plus précisément effectuer les étapes suivantes.

Etape 1 : Réception de la trame 11, connue par son numéro dans l'en-tête MPE des trames OFEC reçues et détection de la perte de la trame 10, la dernière trame reçue étant la trame numéro 9.

Etape 2 : Une pseudo salve (i=10) est générée, toutes ses colonnes de données et de FEC sont marquées comme étant manquantes (L):

**Pseudo Salve 10:  F1-0(L) - DATA(L) -  F0-1(L) F7-2(L) F1-3(L) F0-4(L) F7-5(L)**

Etape 3 : La FEC intra-salve ne peut être calculée pour la pseudo salve 10 totalement perdue, elle peut être calculée pour la trame 11

✓ Pour la pseudo salve 10

Etape 4 : cela conduit à marquer manquantes les colonnes RF1-0 RF0-1 RF7-2 RF1-3 RF0-4 RF7-5

Etape 5 : Cette étape est sans objet pour un salve totalement perdue

Etape 6 : Cette étape est sans objet pour une salve totalement perdue

Etape 7 : Les colonnes de la pseudo salve 10 sont marquées manquantes (L-10) dans les matrices RM:

**RM(0)=4-e 4-j 5-d 5-i 6-c 6-h 7-b 7-g 8-a 8-f**

**RM(1)=5-e 5-j 6-d 6-i 7-c 7-h 8-b 8-g 9-a 9-f**

*RM(2)=6-e 6-j 7-d 7-i 8-c 8-h 9-b 9-g L-10 L-10*

*RM(3)=3-a 3-f 7-e 7-j 8-d 8-i 9-c 9-h L-10 L-10*

*RM(4)=3-b 3-g 4-a 4-f 8-e 8-j 9-d 9-i L-10 L-10*

*RM(5)=3-c 3-h 4-b 4-g 5-a 5-f 9-e 9-j L-10 L-10*

*RM(6)=3-d 3-i 4-c 4-h 5-b 5-g 6-a 6-f L-10 L-10*

*RM(7)=3-e 3-j 4-d 4-i 5-c 5-h 6-b 6-g 7-a 7-f*

✓ Pour la salve 11

Cette salve contient :

*F2-0   11-a 11-b 11-c 11-d 11-e 11-f 11-g 11-h 11-i 11-j F1-1 F0-2 F2-3 F1-4 F0-5*

Etape 4 : Les colonnes: F2-0 F1-1 F0-2 F2-3 F1-4 F0-5 des matrices RF(2),RF(1),RF(0) sont remplies avec les valeurs reçues dans la salve 11.

A ce stade, les colonnes de FEC transmises ont été calculées à partir des contenus de matrices M indiqués comme suit :

*F2-0 et F2-3 à partir de M(2) contenant (6-e:6-j:7-d:7-i:8-c:8-h:9-b:9-g:10-a:10-f:)*

*F1-1 et F1-4 à partir de M(1) contenant (5-e:5-j:6-d:6-i:7-c:7-h:8-b:8-g:9-a:9-f:)*

*F0-2 et F0-5  à partir de M(0) contenant(4-e:4-j:5-d:5-i:6-c:6-h:7-b:7-g:8-a:8-f:)*

Etape 5 : L'exploitation des matrices RM(2) RF(2) pour k=0 et k=3 permet de retrouver les colonnes 10-a et 10-f de la salve 10 en effet :

*RM(2)=6-e 6-j 7-d 7-i 8-c 8-h 9-b 9-g L-10 L-10*

et

RF2-0 calculé à partir de (**6-e 6-j 7-d 7-i 8-c 8-h 9-b 9-g 10-a 10-f**)
RF2-1 calculé à partir de (0-c 0-h 1-b 1-g 2-a 2-f)
RF2-2 calculé à apartir de (0-c 0-h 1-b 1-g 2-a 2-f)
RF2-3 calculé à partir de (**6-e 6-j 7-d 7-i 8-c 8-h 9-b 9-g 10-a 10-f**)
RF2-4 calculé à apartir de (0-c 0-h 1-b 1-g 2-a 2-f)
RF2-5 calculé à partir de (0-c 0-h 1-b 1-g 2-a 2-f)

Etape 6 : On décrit ici le cas A (remise ordonnée et différée). Dans ce cas aucune trame n'est remontée à la couche supérieure pour i=11, 12, 13, 14. En effet la réception des salves de numéro i =12, 13, 14, 15 permettra de reconstituer respectivement les colonnes 10-b 10-g, 10-c 10-h, 10-d 10-i, 10-e 10-j. La salve 10 sera complètement reconstituée dès réception de la trame 15 et les divers datagrammes IP contenus dans son ADT seront remontés à la couche supérieure, ainsi que les datagrammes obtenus par traitement des salves 12,13,14,15 et contenus dans les matrices RM.

Etape 7 : Les données de la salve 11 sont entrelacées dans les matrices RM du récepteur qui contiendront:

$$RM(0)=4\text{-}e\ 4\text{-}j\ 5\text{-}d\ 5\text{-}i\ 6\text{-}c\ 6\text{-}h\ 7\text{-}b\ 7\text{-}g\ 8\text{-}a\ 8\text{-}f$$

$$RM(1)=5\text{-}e\ 5\text{-}j\ 6\text{-}d\ 6\text{-}i\ 7\text{-}c\ 7\text{-}h\ 8\text{-}b\ 8\text{-}g\ 9\text{-}a\ 9\text{-}f$$

$$RM(2)=6\text{-}e\ 6\text{-}j\ 7\text{-}d\ 7\text{-}i\ 8\text{-}c\ 8\text{-}h\ 9\text{-}b\ 9\text{-}g\ L\text{-}10\ L\text{-}10$$

$$RM(3)=7\text{-}e\ 7\text{-}j\ 8\text{-}d\ 8\text{-}i\ 9\text{-}c\ 9\text{-}h\ L\text{-}10\ L\text{-}10\ 11\text{-}a\ 11\text{-}f$$

$$RM(4)=4\text{-}a\ 4\text{-}f\ 8\text{-}e\ 8\text{-}j\ 9\text{-}d\ 9\text{-}i\ L\text{-}10\ L\text{-}10\ 11\text{-}b\ 11\text{-}g$$

$$RM(5)=4\text{-}b\ 4\text{-}g\ 5\text{-}a\ 5\text{-}f\ 9\text{-}e\ 9\text{-}j\ L\text{-}10\ L\text{-}10\ 11\text{-}c\ 11\text{-}h$$

$$RM(6)=4\text{-}c\ 4\text{-}h\ 5\text{-}b\ 5\text{-}g\ 6\text{-}a\ 6\text{-}f\ L\text{-}10\ L\text{-}10\ 11\text{-}d\ 11\text{-}i$$

$$RM(7)=4\text{-}d\ 4\text{-}i\ 5\text{-}c\ 5\text{-}h\ 6\text{-}b\ 6\text{-}g\ 7\text{-}a\ 7\text{-}f\ 11\text{-}e\ 11\text{-}j$$

On aura compris que le procédé selon le premier aspect de l'invention permet d'étendre le standard DVB-H, en proposant la mise en oeuvre d'une correction FEC inter-salves rendant possible la récupération de salves entières.

Cette correction d'erreur est illustrée par la figure 2b, donnée à titre comparatif avec la figure 2a, sur laquelle on a représenté différentes salves, chacune constituée des données ADT et des données OFEC de correction FEC inter-salves, ainsi que la correction d'erreurs - schématisée par un bloc Ec - susceptible d'être réalisée à l'aide de la correction FEC inter-salves pour la perte totale ou partielle d'une ou plusieurs salves. Sur la figure 2b, la correction d'erreur Ec permet ainsi de récupérer les données de salves S1 et S3 partiellement perdues, et les données d'une salve S2 totalement perdue.

Par comparaison avec la figure 2a, on comprend que la correction inter-salves selon l'invention permet d'étendre la correction d'erreur à des données perdues lors de longues périodes d'interruptions/extinctions.

Ce procédé présente en outre les avantages suivants :

- le procédé proposé est compatible avec le standard existant, en ce qu'une pile DVB-H est apte à comprendre le flux de transport TS (selon l'acronyme Transport Stream) résultant de la mise en oeuvre du procédé selon l'invention.
- le procédé proposé conserve les possibilités d'économie de batteries apportées par le DVBH. En effet les dispersions dans le temps opérées sur les données afin de calculer la FEC inter-salves et de la diffuser, se font exclusivement sur les occurrences successives des salves d'un service donné et non sur des données consécutives dans le TS (Transport Stream). Le terminal peut mettre son circuit radio hors tension entre les occurrences des salves
- aucun retard n'est apporté à l'émission, et les terminaux recevant dans de bonnes conditions n'ont aucun retard supplémentaire dans la réception, ils conserveront des temps de changement de chaine (zapping) faibles.
- les terminaux placés dans de mauvaises conditions de réception doivent attendre l'arrivée des salves suivantes pour corriger une salve sévèrement ou totalement erronée.
  Il est à noter que dans ce cas , le terminal pourra soit figer l'image et attendre la correction pour reprendre l'affichage là ou il s'était interrompu (analogue au time shifting), soit, de façon préventive, afficher moins vite (par exemple 20 images par seconde) au démarrage d'un service pendant un temps suffisant pour accumuler dans sa mémoire assez d'informations pour reconstituer cette fois immédiatement une salve perdue.
- les paramètres du procédé proposé peuvent être ajustés pour s'adapter aux caractéristiques désirées

■ la gamme temporelle d'interdépendance entre les salves (B+S) peut être ajustée ;

■ la quantité de correction d'erreur directe (c'est à dire sa robustesse à la perte de signal) peut être ajustée ;

■ les paramètres peuvent être choisis de manière à ajuster la taille maximale de la mémoire dans le terminal récepteur.

■ la FEC inter-salves peut utiliser le même code correcteur d'erreur (Reed Solomon (191,255)) et s=8 que celui utilisé pour la FEC intra-salve, et est en particulier susceptible de pouvoir réutiliser le hardware présent dans les récepteurs compatibles DVBH.

■ pour un même niveau de FEC, la puissance de calcul nécessaire pour la FEC inter-salves est la même que celle nécessaire pour la FEC intra-salve.

■ la FEC inter-salves peut agir en complément de la FEC intra-salve, ou bien en remplacement total ou partiel.

■ la FEC inter-salves peut corriger des salves complètes ou des portions de salves.

L'invention n'est bien entendu pas limitée au procédé décrit précédemment, mais s'étend à un dispositif électronique comprenant des moyens logiciels et/ou matériels configurés pour mettre en oeuvre ce procédé, tant au niveau de l'émission (pour réaliser le codage de la FEC inter-salves) qu'au niveau de la réception (pour réaliser le décodage de la FEC inter-salves et la récupération de la ou des salves partiellement ou totalement perdues).

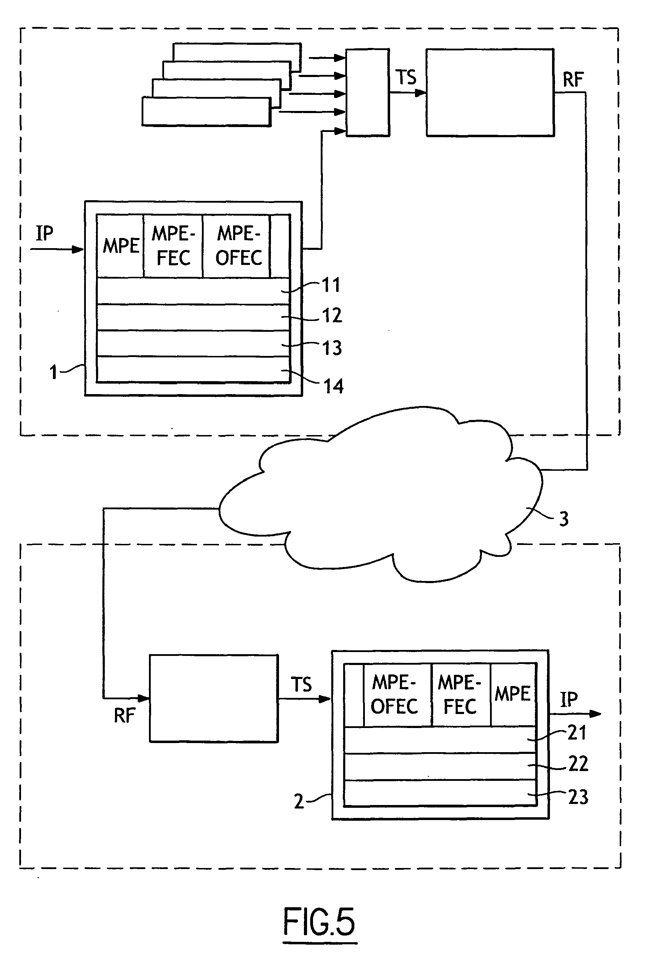

On a représenté de manière schématique sur la figure 5 un dispositif 1 apte à mettre en oeuvre le codage de la FEC inter-salves. Ce dispositif 1 reprend typiquement les fonctions d'un encapsulateur IP (IP Encapsulator) recevant des flux IP, les découpant temporellement, calculant la protection FEC intra-salve, encapsulant les paquets IP et les incrustant dans le flux de transport. Il comporte également des moyens de calcul de la protection inter-salves, mettant en oeuvre des moyens 11 d'entrelacement de salves d'un flux élémentaire, des moyens 12 de calcul de FEC pour les salves entrelacées, des moyens 13 de dispersion de la FEC inter-salves ainsi calculée sur des salves du flux élémentaire pour former une trame MPE-OFEC, et des moyens 14 d'encapsulation de cette trame en sections MPE-OFEC.

On notera que le dispositif 1 pour le calcul de la FEC inter-salves peut également être intégré au sein d'appareils de la chaine de distribution DVB-H (multiplexeur, adaptateur réseau de la chaine SFN (network adapters), ou dans des appareils tels que le iSplicer de la société UDcast, notamment dans le cas où le dispositif calcule la FEC inter-salves et l'insère en addition ou en remplacement de la FEC intra-salve.

On a également représenté de manière schématique sur la figure 5 un dispositif 2 recevant un flux de transport TS ayant transité sur la liaison comprenant le réseau 3, et comprenant outre les fonctions classiques d'un désencapsulateur (récupération des datagrammes IP et correction contre les pertes intra-salve à partir des sections MPE et MPE-FEC), des moyens de correction contre la perte d'une ou plusieurs salves entières, ces moyens comprenant des moyens 21 d'entrelacement des trames MPE-OFEC, des moyens 22 de mise en oeuvre de la correction sur les trames entrelacées pour récupérer la ou les salves perdues, ainsi que des moyens 23 de désentrelacement des trames entrelacées corrigées contre les pertes.

## Revendications

1. Procédé de protection contre l'erreur dans un système de transmission dans lequel un flux de données comprend une pluralité de flux élémentaires (ES) découpés temporellement pour être transmis sous la forme de salves, **caractérisé en ce qu'**il met en oeuvre :

   à l'émission de chaque salve d'un flux élémentaire, un entrelacement des données d'une pluralité de salves du flux élémentaire et un calcul de correction d'erreur, dite correction inter-salves, consistant en un traitement de correction d'erreur directe (FEC) appliqué aux données ainsi entrelacées,
   et une dispersion de la correction calculée sur une pluralité de salves du flux élémentaire, de manière à associer à chaque salve du flux élémentaire des données relatives à la correction inter-salves.

2. Procédé selon la revendication 1, dans lequel les données d'une salve sont transmises sans délai, accompagnées de données supplémentaires relatives à des informations de correction inter-salves qui ont été associées à cette salve.

3. Procédé selon la revendication 1, dans lequel l'émission des salves est retardée, en retardant l'émission des données d'une salve pour transmettre lesdites données dans une salve ultérieure, ou en retardant l'émission de données supplémentaires relatives à des informations de correction inter-salves qui ont été associées à cette salve pour transmettre lesdites données supplémentaires dans une salve ultérieure.

4. Procédé selon l'une des revendications précédentes, **caractérisé en ce que** les données d'une salve sont transmises telles quelles dans des salves protégées par la correction d'erreur directe inter-salves.

5. Procédé selon l'une des revendications précédentes, **caractérisé en ce que** la correction d'erreur directe inter-salves est calculée sur une fenêtre glissante d'une pluralité de salves entrelacées.

6. Procédé selon la revendication précédente, **caractérisé en ce que** le traitement de correction d'erreur directe (FEC) met en oeuvre un calcul de codes correcteurs d'erreurs Reed-Solomon.

7. Procédé selon l'une des deux revendications précédentes, **caractérisé en ce que** la correction calculée est dispersée sur une pluralité de salves du flux élémentaire, de sorte à former une trame pour chaque salve.

8. Procédé selon la revendication précédente, **caractérisé en ce qu'**une trame est encapsulée en sections, lesdites sections comprenant des sections relatives aux données de la salve et des sections relatives à la correction inter-salves.

9. Procédé selon la revendication précédente, **caractérisé en ce qu'**il comporte également l'introduction dans chaque section relative à la correction inter-salves d'un en-tête présentant des informations telles qu'un récepteur du flux élémentaire a connaissance des paramètres de mise en oeuvre de la correction inter-salves.

10. Procédé selon l'une des revendications précédentes **caractérisé en ce qu'**il met également en oeuvre une protection contre la perte de données à l'intérieur d'une salve, ladite protection étant assurée en calculant une correction d'erreur directe intra-salve.

11. Procédé selon la revendication 1, **caractérisé en ce que** l'entrelacement consiste à entrelacer chaque salve d'une pluralité de salves du flux élémentaire dans un premier ensemble de colonnes d'une pluralité de matrices ayant un premier ensemble de colonnes regroupant les données d'une salve et constituant un tableau dit Tableau de Données d'Application et un second ensemble de colonnes regroupant des codes correcteur d'erreur et constituant un tableau dit Tableau de Données Reed Solomon.

12. Procédé selon la revendication 11, **caractérisé en ce que** le calcul d'erreur directe appliqué aux salves entrelacées consiste à calculer un Tableau de Données Reed Salomon (RSDT) pour chacune des matrices, à raison d'une matrice calculée par salve émise.

13. Procédé selon la revendication 7, prise en combinaison avec la revendication 12, **caractérisé en ce que** la dispersion de la correction calculée consiste à choisir des colonnes dans des Tableaux de Données Reed Solomon et à transmettre les colonnes choisies dans une salve.

14. Procédé selon la revendication 9, prise en combinaison avec les revendications 10 à 13, caractérisé en ce les informations d'en tête comprennent l'indication du nombre de salves qui sont entrelacées pour calculer la correction inter-salves, ainsi que l'indication du nombre de salves sur lesquelles la correction inter-salves calculée est dispersée.

15. Procédé selon la revendication 14, **caractérisé en ce que**, à la réception des sections d'une trame, les sections MPE relatives aux données de la salve sont entrelacées dans les Tableaux de Données d'Application d'une pluralité de matrices, et les sections relatives à la correction inter-salves sont placées dans les Tableaux de Données Reed Solomon desdites matrices, et **en ce qu'**en cas de perte totale ou partielle d'une salve, les sections relatives aux données de ladite salve perdue sont recomposées à partir des données des Tableaux de Données Reed Solomon dans lesquels les sections relatives à la correction inter-salves ont été placées.

16. Procédé selon l'une quelconque des revendications précédentes, **caractérisé en ce que** le système de transmission est un système compatible DVB-H.

17. Dispositif comprenant des moyens logiciels et/ou matériels configurés pour mettre en oeuvre le procédé selon l'une quelconque des revendications précédentes.

**Claims**

1. A method for protection against errors in a transmission system wherein a data stream comprises a plurality of time-sliced elementary streams (ES) in order to be transmitted as bursts, **characterized in that** it applies:

upon transmission of each burst of an elementary stream, interlacing of the data of plurality of bursts of the elementary stream, an inter-burst error correction calculation consisting in a forward error correction processing operation (FEC) applied to interlaced data of a plurality of bursts of the elementary stream, and a dispersion of the correction calculated on a plurality of bursts of the elementary stream, so as to associate with each burst of the elementary stream, data relating to the inter-burst correction.

2. The method according to claim 1, wherein the data of a burst are transmitted without any delay, accompanied by additional data relating to correction information which has been associated with this burst.

3. The method according to claim 1, wherein the transmission of the bursts is delayed, by delaying transmission of the data of a burst in order to transmit said data in a subsequent burst, or by delaying the transmission of additional data relating to correction information which has been associated with this burst in order to transmit said additional data in a subsequent burst.

4. The method according to any of the preceding claims, **characterized in that** the data of a burst are transmitted as such in bursts protected by the inter-burst forward error correction.

5. The method according to any of the preceding claims, **characterized in that** the inter-burst forward error correction is calculated on a sliding window of a plurality of interlaced bursts.

6. The method according to the preceding claim, **characterized in that** the forward error correction (FEC) processing operation applies a calculation of Reed-Solomon error correcting codes.

7. The method according to any of the two preceding claims, **characterized in that** the calculated correction is dispersed over a plurality of bursts of the elementary stream, so as to form a frame for each burst.

8. The method according to the preceding claim, **characterized in that** a frame is encapsulated in sections, said sections comprising sections relating to the data of the burst and sections relating to the inter-burst correction.

9. The method according to the preceding claim, **characterized in that** is also includes the introduction into each section relating to the inter-burst correction, of a header having information such that a receiver of the elementary stream is aware of the parameters for applying the inter-burst correction.

10. The method according to any of the preceding claims, **characterized in that** it also applies a protection against loss of data within a burst, said protection being provided by calculating an intra-burst forward error correction.

11. The method according to claim 1, **characterized in that** the interlacing consists in interlacing each burst of a plurality of bursts of the elementary stream in a first set of columns of a plurality of matrices having a first set of columns grouping the data of a burst and forming a table so-called Application Data Table, and a second set of columns grouping error corrector codes and forming a table so-called Reed-Solomon Data Table.

12. The method according to claim 11, **characterized in that** the forward error calculation applied to the interlaced bursts consists of calculating a Reed-Solomon Data Table (RSDT) for each of the matrices, with one calculated matrix per transmitted burst.

13. The method according to claim 7, taken in combination with claim 12, **characterized in that** the dispersion of the calculated correction consists in selecting columns in Reed-Solomon Data Tables and of transmitting the selected columns in a burst.

14. The method according to claim 9, taken in combination with claims 10 to 13, **characterized in that** the header information comprises the indication of the number of bursts which are interlaced for calculating the inter-burst correction, as well as the indication of the number of bursts on which the calculated inter-burst correction is dispersed.

15. The method according to claim 14, **characterized in that**, upon reception of the sections of a frame, the MPE sections relating to the data of the burst are interlaced in Application Data Tables of a plurality of matrices, and the sections relating to the inter-burst correction are placed in the Reed-Solomon Data Tables of said matrices, and **in**

**that**, in the case of total or partial loss of a burst, the sections relating to the data of said lost burst are reconstructed from data of the Reed-Solomon Data Tables in which the sections relative to the inter-burst correction have been placed.

16. The method according to any of the preceding claims, **characterized in that** the transmission system is a DVB-H compatible system.

17. A device comprising software and/or hardware means configured for applying the method according to any of the preceding claims.

**Patentansprüche**

1. Verfahren für den Schutz vor Fehlern in einem Übertragungssystem, bei dem ein Datenfluss eine Vielzahl von Elementarflüssen (ES) umfasst, die zeitlich aufgeteilt sind, um in Form von Bursts übertragen zu werden, **dadurch gekennzeichnet, dass** es Folgendes ausführt:

   - bei der Sendung jedes Bursts eines Elementarflusses, eine Verschachtelung der Daten einer Vielzahl von Bursts des Elementarflusses und eine Fehlerkorrekturberechnung, so genannte Interburst-Korrektur, die in einer direkten Fehlerkorrekturbehandlung (FEC) besteht, die auf die auf diese Weise verschachtelten Daten angewendet wird,
   - und eine Verteilung der berechneten Korrektur auf eine Vielzahl von Bursts des Elementarflusses, derart, dass jedem Burst des Elementarflusses Daten in Bezug auf die Interburst-Korrektur zugeordnet werden.

2. Verfahren nach Anspruch 1, wobei die Daten eines Bursts ohne Verzögerung übertragen werden, begleitet von zusätzlichen Daten in Bezug auf Interburst-Korrektur-Informationen, die diesem Burst zugeordnet wurden.

3. Verfahren nach Anspruch 1, wobei die Sendung der Bursts verzögert wird, indem die Sendung der Daten eines Bursts verzögert wird, um die Daten in einem späteren Burst zu übertragen, oder indem die Sendung zusätzlicher Daten in Bezug auf Interburst-Korrektur-Informationen, die diesem Burst zugeordnet wurden, verzögert wird, um die zusätzlichen Daten in einem späteren Burst zu übertragen.

4. Verfahren nach einem der vorhergehenden Ansprüche, **dadurch gekennzeichnet, dass** die Daten eines Bursts unverändert in Bursts übertragen werden, die durch die direkte Interburst-Fehlerkorrektur geschützt sind.

5. Verfahren nach einem der vorhergehenden Ansprüche, **dadurch gekennzeichnet, dass** die direkte Interburst-Fehlerkorrektur in einem Sliding Window einer Vielzahl von verschachtelten Bursts berechnet wird.

6. Verfahren nach dem vorhergehenden Anspruch, **dadurch gekennzeichnet, dass** die direkte Fehlerkorrekturbehandlung (FEC) eine Berechnung von Reed-Solomon-Fehlerkorrekturcodes durchführt.

7. Verfahren nach einem der beiden vorhergehenden Ansprüche, **dadurch gekennzeichnet, dass** die berechnete Korrektur auf eine Vielzahl von Bursts des Elementarflusses verteilt wird, derart, dass für jeden Burst ein Frame gebildet wird.

8. Verfahren nach dem vorhergehenden Anspruch, **dadurch gekennzeichnet, dass** ein Frame in Abschnitte eingekapselt ist, wobei die Abschnitte Abschnitte in Bezug auf die Daten des Bursts und Abschnitte in Bezug auf die Interburst-Korrektur umfassen.

9. Verfahren nach dem vorhergehenden Anspruch, **dadurch gekennzeichnet, dass** es auch die Einführung eines Headers in jeden Abschnitt in Bezug auf die Interburst-Korrektur umfasst, der derartige Informationen aufweist, dass ein Empfänger des Elementarflusses Kenntnis der Durchführungsparameter der Interburst-Korrektur hat.

10. Verfahren nach einem der vorhergehenden Ansprüche, **dadurch gekennzeichnet, dass** es auch einen Schutz gegen den Verlust von Daten im Innern eines Bursts durchführt, wobei der Schutz sichergestellt wird, indem eine direkte Interburst-Fehlerkorrektur berechnet wird.

11. Verfahren nach Anspruch 1, **dadurch gekennzeichnet, dass** die Verschachtelung darin besteht, jeden Burst einer Vielzahl von Bursts des Elementarflusses in einer ersten Gruppe von Spalten einer Vielzahl von Matrizen zu verschachteln, die eine erste Gruppe von Spalten hat, welche die Daten eines Bursts zusammenfasst und eine Tabelle, so genannte Anwendungsdaten-Tabelle, bildet, und die eine zweite Gruppe von Spalten hat, die Fehlerkorrektur-Codes zusammenfasst und eine Tabelle, so genannte Reed-Solomon-Daten-Tabelle, bildet.

12. Verfahren nach Anspruch 11, **dadurch gekennzeichnet, dass** die direkte Fehlerberechnung, die auf die verschachtelten Bursts angewendet wird, darin besteht, eine Reed-Solomon-Daten-Tabelle (RSDT) für jede der Matrizen, auf Grund einer Matrix, die pro gesendetem Burst berechnet wird, zu berechnen.

13. Verfahren nach Anspruch 7, in Kombination mit Anspruch 12, **dadurch gekennzeichnet, dass** die Verteilung der berechneten Korrektur darin besteht, Spalten in der Reed-Solomon-Daten-Tabelle auszuwählen und die ausgewählten Spalten in einem Burst zu übertragen.

14. Verfahren nach Anspruch 9, in Kombination mit den Ansprüchen 10 bis 13, **dadurch gekennzeichnet, dass** die Header-Informationen die Angabe der Anzahl von Bursts, die verschachtelt sind, um die Interburst-Korrektur zu berechnen, sowie die Angabe der Anzahl von Bursts, auf welche die berechnete Interburst-Korrektur verteilt ist, umfassen.

15. Verfahren nach Anspruch 14, **dadurch gekennzeichnet, dass**, beim Empfang der Abschnitte eines Frame, die MPE-Abschnitte in Bezug auf die Daten des Bursts in den Anwendungsdaten-Tabellen einer Vielzahl von Matrizen verschachtelt werden und die Abschnitte in Bezug auf die Interburst-Korrektur in den Reed-Solomon-Daten-Tabellen der Matrizen platziert werden, und dass für den Fall eines vollständigen oder teilweisen Verlustes eines Bursts die Abschnitte in Bezug auf die Daten des verlorenen Bursts ausgehend von den Daten der Reed-Solomon-Daten-Tabellen, in welchen die Abschnitte in Bezug auf die Interburst-Korrektur platziert wurden, wieder zusammengesetzt werden.

16. Verfahren nach einem der vorhergehenden Ansprüche, **dadurch gekennzeichnet, dass** das Übertragungssystem ein DVB-H-kompatibles System ist.

17. Vorrichtung umfassend Softwaremittel und/oder Hardwaremittel, die dafür eingerichtet sind, das Verfahren nach einem der vorhergehenden Ansprüche durchzuführen.

191 colonnes | 64 colonnes

0 | 190 | 0 | 63

0

ADT

RS DT

R-1

## FIG.1

EP 2 119 077 B1

FIG.2a

FIG.2b

DATA

i = 8

| a | b | c | d | e | f | g | h | i | j |

| m | 0 | 1 | 2 | 3 | 4 | 5 | 6 | 7 | 0 | 1 | 2 | 3 | 4 | 5 | 6 | 7 | 0 | 1 | 2 |
|---|---|---|---|---|---|---|---|---|---|---|---|---|---|---|---|---|---|---|---|
| i |  |  |  |  |  |  |  |  |  |  |  |  |  |  |  |  |  |  |  |
| 0 | af | bg | ch | di | ej |  |  |  |  |  |  |  |  |  |  |  |  |  |  |
| 1 | 03 | af | bg | ch | di | ej |  |  |  |  |  |  |  |  |  |  |  |  |  |
| 2 | 14 | 03 | af | bg | ch | di | ej |  |  |  |  |  |  |  |  |  |  |  |  |
| 3 | 25 | 14 | 03 | af | bg | ch | di | ej |  |  |  |  |  |  |  |  |  |  |  |
| 4 |  | 25 | 14 | 03 | af | bg | ch | di | ej |  |  |  |  |  |  |  |  |  |  |
| 5 |  |  | 25 | 14 | 03 | af | bg | ch | di | ej |  |  |  |  |  |  |  |  |  |
| 6 |  |  |  | 25 | 14 | 03 | af | bg | ch | di | ej |  |  |  |  |  |  |  |  |
| 7 |  |  |  |  | 25 | 14 | 03 | af | bg | ch | di | ej |  |  |  |  |  |  |  |
| 8 |  |  |  |  |  | 25 | 14 | 03 | af | bg | ch | di | ej |  |  |  |  |  |  |
| 9 |  |  |  |  |  |  | 25 | 14 | 03 | af | bg | ch | di | ej |  |  |  |  |  |
| 10 |  |  |  |  |  |  |  | 25 | 14 | 03 | af | bg | ch | di | ej |  |  |  |  |
| 11 |  |  |  |  |  |  |  |  | 25 | 14 | 03 | af | bg | ch | di | ej |  |  |  |
| 12 |  |  |  |  |  |  |  |  |  | 25 | 14 | 03 | af | bg | ch | di | ej |  |  |
| 13 |  |  |  |  |  |  |  |  |  |  | 25 | 14 | 03 | af | bg | ch | di | ej |  |
| 14 |  |  |  |  |  |  |  |  |  |  |  | 25 | 14 | 03 | af | bg | ch | di | ej |

## FIG.3a

| e | j | d | i | c | h | b | g | a | f | 0 | 1 | 2 | 3 | 4 | 5 |

## FIG.3b

OFEC | DATA | iFEC | OFEC

| 7.0 | a | b | c | d | e | f | g | h | i | j | I1 | I2 | I3 | I4 | 6.1 | 5.2 | 7.3 | 6.4 | 5.5 |

## FIG.3c

| | m | 5 | 6 | 7 | 0 | 1 | 2 | 3 | 4 | 5 | 6 | 7 | 0 | 1 | 2 | 3 | 4 | 5 | 6 | 7 |
|---|---|---|---|---|---|---|---|---|---|---|---|---|---|---|---|---|---|---|---|---|
| i | | | | | | | | | | | | | | | | | | | | |
| 5 | | af | bg | ch | di | ej | | | | | | | | | | | | | | |
| 6 | | 03 | af | bg | ch | di | ej | | | | | | | | | | | | | |
| 7 | | 14 | 03 | af | bg | ch | di | ej | | | | | | | | | | | | |
| 8 | | 25 | 14 | 03 | af | bg | ch | di | ej | | | | | | | | | | | |
| 9 | | | 25 | 14 | 03 | af | bg | ch | di | ej | | | | | | | | | | |
| 10 | | | | 25 | 14 | 03 | af | bg | ch | di | ej | | | | | | | | | |
| 11 | | | | | 25 | 14 | 03 | af | bg | ch | di | ej | | | | | | | | |
| 12 | | | | | | 25 | 14 | 03 | af | bg | ch | di | ej | | | | | | | |
| 13 | | | | | | | 25 | 14 | 03 | af | bg | ch | di | ej | | | | | | |
| 14 | | | | | | | | 25 | 14 | 03 | af | bg | ch | di | ej | | | | | |
| 15 | | | | | | | | | 25 | 14 | 03 | af | bg | ch | di | ej | | | | |
| 16 | | | | | | | | | | 25 | 14 | 03 | af | bg | ch | di | ej | | | |
| 17 | | | | | | | | | | | 25 | 14 | 03 | af | bg | ch | di | ej | | |
| 18 | | | | | | | | | | | | 25 | 14 | 03 | af | bg | ch | di | ej | |
| 19 | | | | | | | | | | | | | 25 | 14 | 03 | af | bg | ch | di | ej |

# FIG.4

FIG.5

**EP 2 119 077 B1**

## RÉFÉRENCES CITÉES DANS LA DESCRIPTION

**Documents brevets cités dans la description**

- WO 2006123231 A